# FASCICULE DE BREVET EUROPEEN

(11) **EP 0 733 527 B1**
(45) Date de publication et mention de la délivrance du brevet: **09.09.1998**
(21) Numéro de dépôt: 96400622.5
(22) Date de dépôt: 22.03.1996
(51) Int. Cl.: B60S 1/52

(54) **Gicleur pour véhicule**
Waschspritzdüse für Kraftfahrzeuge
Washer nozzle for a motor vehicle

(30) Priorité: 22.03.1995 FR 9503354
(43) Date de publication de la demande: 25.09.1996
(73) Titulaire: SOCIETE D'ETUDES ET DE REALISATIONS INDUSTRIELLES ET COMMERCIALES SERIC, 77820 Le chatelet en Brie (FR)
(72) Inventeur: Lelong, Reynald, 77670 Saint Mammes (FR)
(74) Mandataire: Derambure, Christian

(56) Documents cités:
- CH-A- 378 710
- FR-A- 2 527 479
- US-A- 5 163 619

## Description

L'invention concerne un gicleur pour la distribution d'un liquide, notamment pour le nettoyage des pare-brises ou des calottes des phares d'un véhicule.

Un tel gicleur permet généralement de déposer un liquide lave-vitre sur le pare-brise dans des zones préétablies.

Les gicleurs de l'art antérieur comprennent un conduit d'amenée et au moins un conduit de sortie débouchant sur le conduit d'amenée par un trou de communication. Au moins un des conduits de sortie est incliné par rapport au conduit d'amenée, le(s) conduit(s) de sortie et le conduit d'amenée étant sensiblement rectilignes.

Cependant, cette configuration ne permet pas une distribution très précise du liquide et entraîne ainsi une faible résistance à la pulvérisation qui se produit dès que la vitesse du véhicule augmente.

D'autres part, cette configuration implique des turbulences au niveau des trous de communication.

De ce fait, le lavage du pare-brise est peu efficace.

L'invention vise donc à pallier ces inconvénients.

Elle propose ainsi un gicleur du type précité connu, par exemple, de CH-A-378 710 ou de US-A-5 163 619, caractérisé en ce qu'il comprend en outre une paroi de séparation située dans une partie au moins du conduit d'amenée et adjacente aux conduits de sortie, de manière à partager le conduit d'amenée en deux compartiments dans chacun desquels débouche le trou de communication respectif,

La paroi a pour fonction d'empêcher la diffusion éparse du liquide dans les conduits de sortie. La paroi permet la stabilisation du liquide et sa forte concentration dans les conduits de sortie et en sortie de ces derniers.

On obtient ainsi une résistance importante à la pulvérisation qui augmente avec la vitesse.

L'invention permet ainsi une distribution très précise du liquide dans les zones requises et par conséquent, un nettoyage performant, quelle que soit la vitesse du véhicule.

De plus, le gicleur selon l'invention est tout à fait adapté pour des véhicules à ligne très fluide et est simple à réaliser.

Divers modes de réalisation de l'invention sont spécifiés dans les revendications 2 à 10.

D'autres particularités de l'invention résulteront de la description qui va suivre, en référence aux dessins annexés, donnés à titre d'exemples non limitatifs.

La figure 1 est une vue schématique partiellement en coupe d'un gicleur selon l'invention.

La figure 2 représente une vue en coupe selon II-II de la figure 1.

La figure 3 est une vue schématique de face, en perspective d'un gicleur selon l'invention lorsqu'il est installé.

La figure 4 est une coupe transversale du gicleur représenté à la figure 3.

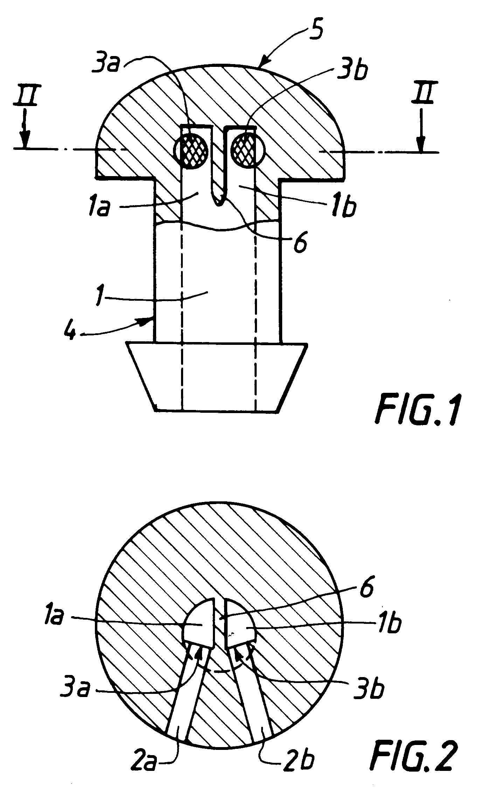

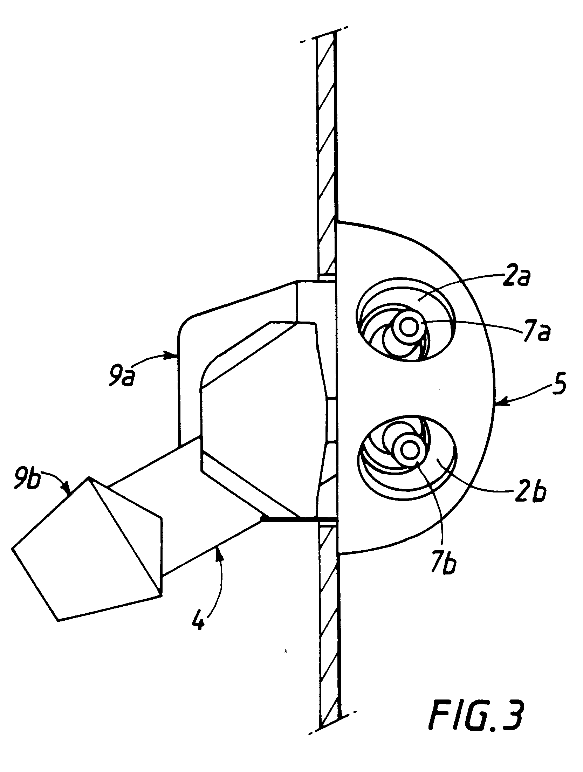

Comme le montrent les figures 1 et 2, le gicleur selon l'invention comprend un conduit d'amenée 1 et au moins deux conduits de sortie 2a, 2b débouchant chacun sur le conduit d'amenée 1 par un trou de communication 3a, 3b.

De préférence, le gicleur comprend deux conduits de sortie 2a, 2b qui sont inclinés par rapport au conduit d'amenée 1.

Bien entendu, seul un des conduits de sortie 2a, 2b peut être incliné par rapport au conduit d'amenée 1.

Chaque conduit 1, 2a et 2b est sensiblement rectiligne.

D'une manière générale, le gicleur présente sensiblement la forme d'un champignon comportant un corps 4 et une tête 5. Le corps 4 comprend le conduit d'amenée 1, et la tête 5 comprend les conduits de sortie 2a, 2b.

Comme représenté à la figure 3, le corps 4 du gicleur peut être incliné par rapport à sa tête 5.

De préférence, le gicleur est réalisé en matière plastique.

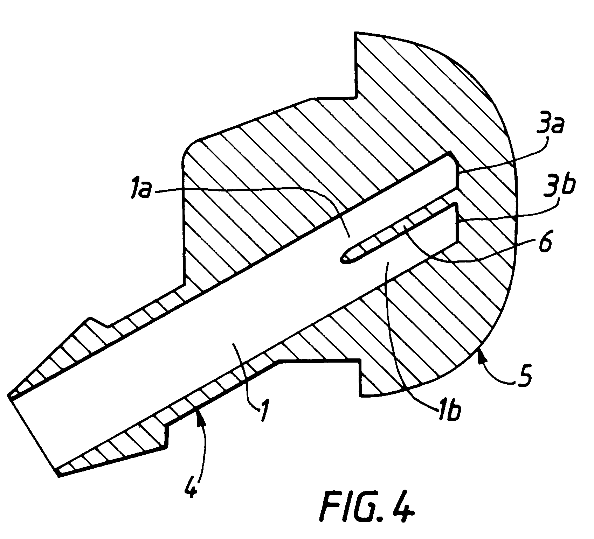

Selon l'invention, le gicleur comprend en outre une paroi de séparation 6 représentée à la figure 4, située dans une partie au moins du conduit d'amenée 1 et adjacente aux conduits de sortie 2a, 2b de manière à partager le conduit d'amenée 1 en deux compartiments 1a, 1b dans chacun desquels débouche le trou de communication 3a, 3b respectif.

Ainsi, le liquide en provenance de l'ouverture du conduit d'amenée 1, opposée aux trous de communication 3a, 3b, sera distribué sans turbulence, et donc de manière plus concentrée, dans chacun des compartiments 1a, 1b et donc dans les conduits de sortie 2a, 2b.

De préférence, la partie extrême de la paroi 6, opposée aux trous de communication 3a, 3b, est effilée afin de permettre un meilleur flux.

Suivant une version préférée, cette paroi 6 est située dans une partie seulement du conduit d'amenée 1, soit sur environ un huitième de la longueur du conduit d'amenée 1.

Selon un mode de réalisation particulier, représenté à la figure 3, le conduit d'amenée 1 a une section intérieure sensiblement constante, l'ouverture transversale du conduit étant légèrement plus faible au droit de la paroi de séparation qu'à l'extrémité de celle-ci.

De plus, les conduits de sortie 2a, 2b ont une section sensiblement tronconique.

Dans chacun des conduits 2a, 2b, et depuis leur trou de communication 3a, 3b, est disposé un tuyau de passage 7a, 7b du liquide, de section sensiblement constante et de diamètre sensiblement inférieur à celui des trous de communication 3a, 3b.

Ce tuyau de passage 7a, 7b comprend à son extrémité adjacente au trou de communication 3a, 3b une rotule 8 non représentée permettant son orientation.

La forme sensiblement tronconique des conduits de sortie 2a, 2b permet un réglage angulaire de la rotule 8 respective.

Le tuyau de passage 7a, 7b muni de la rotule 8 étant connu de l'art antérieur ne sera pas décrit plus en détail.

Le diamètre d'un tel tuyau 7a, 7b est généralement imposé et est de l'ordre de 0,6 à 0,9 mm.

Afin d'une part, de bien calibrer le jet de liquide et d'autre part, de ne pas fragiliser le gicleur, et tenant compte du diamètre imposé du tuyau 7a, 7b, le diamètre des trous de communication 3a, 3b doit être compris entre 1,5 mm et 2 mm environ. Un bon compromis de ces exigences aboutit à fixer ce diamètre à 1,8 mm environ.

Enfin, comme le montre la figure 3, le gicleur comprend en outre des moyens de fixation 9a, 9b à une partie du véhicule.

Généralement, le gicleur selon l'invention peut être installé sur le capot ou le toit, le hayon, ou la grille de auvent du véhicule.

Bien entendu, on peut envisager d'adapter un tel gicleur aux calottes des phares d'un véhicule ou à tout autre dispositif nécessitant une distribution concentrée d'un liquide dans des zones prédéfinies.

## Revendications

1. Gicleur pour la distribution d'un liquide, notamment pour le nettoyage des pare-brises ou des calottes des phares d'un véhicule, comportant un conduit d'amenée (1) et au moins deux conduits de sortie (2a, 2b) débouchant chacun sur le conduit d'amenée (1) par un trou de communication (3a, 3b), au moins un des conduits de sortie (2a, 2b) étant incliné par rapport au conduit d'amenée (1), et le conduit d'amenée (1) et les conduits de sortie (2a, 2b) étant sensiblement rectilignes, caractérisé en ce que le gicleur comprend en outre une paroi de séparation (6) située dans une partie au moins du conduit d'amenée (1) et adjacente aux conduits de sortie (2a, 2b), de manière à partager le conduit d'amenée (1) en deux compartiments (1a, 1b) dans chacun desquels débouche le trou de communication respectif (3a, 3b), la paroi (6) ayant pour fonction d'empêcher la diffusion éparse du liquide dans les conduits de sortie (2a, 2b).

2. Gicleur selon la revendication 1, caractérisé en ce que le conduit d'amenée (1) a une section intérieure sensiblement constante, l'ouverture transversale du conduit (1) étant légèrement plus faible au droit de la paroi de séparation (6) qu'à l'extrémité de celle-ci.

3. Gicleur selon la revendication 1 ou 2, caractérisé en ce que les conduits de sortie (2a, 2b) ont une section sensiblement tronconique.

4. Gicleur selon l'une des revendications 1 à 3, caractérisé en ce que la partie extrême de la paroi de séparation (6), opposée aux trous de communication (3a, 3b), est effilée.

5. Gicleur selon l'une des revendications 1 à 4, caractérisé en ce que la paroi (6) est située dans une partie seulement du conduit d'amenée (1).

6. Gicleur selon la revendication 5, caractérisé en ce que la paroi (6) est située sensiblement sur un huitième de la longueur du conduit d'amenée (1).

7. Gicleur selon l'une des revendications 1 à 6, caractérisé en ce que le diamètre des trous de communication (3a, 3b) est compris entre 1,5 mm et 2 mm, et égal de préférence à 1,8 mm, environ.

8. Gicleur selon l'une des revendications 1 à 7, caractérisé en ce qu'il comporte dans les conduits de sortie (2a, 2b), depuis leur trou de communication (3a, 3b), un tuyau (7a, 7b) de passage du liquide, de section sensiblement constante et de diamètre sensiblement inférieur à celui des trous de communication (3a, 3b).

9. Gicleur selon la revendication 8, caractérisé en ce que le tuyau de passage (7a, 7b) comprend à son extrémité adjacente au trou de communication (3a, 3b) une rotule (8) permettant son orientation.

10. Gicleur selon l'une des revendications 1 à 9, caractérisé en ce qu'il comprend en outre des moyens de fixation (9a, 9b) à une partie du véhicule.

## Claims

1. A washer nozzle for supplying a liquid, particularly to clean the windscreens or the cover glasses of the headlights of a vehicle, including a supply duct (1) and at least two outlet ducts (2a, 2b) each opening into the supply duct (1) via a through hole (3a, 3b), at least one of the outlet ducts (2a, 2b) being inclined with respect to the supply duct (1), and the supply pipe (1) and outlet ducts (2a, 2b) being substantially rectilinear, characterised in that the washer nozzle further comprises a separation wall (6) located in at least one part of the supply duct (1) and adjacent to the outlet ducts (2a, 2b), so as to divide the supply duct (1) into two compartments (1a, 1b) each of which has the respective through hole (3a, 3b) opening into it, the function of the separation wall (6) being to prevent a sparse diffusion of the liquid in the outlet ducts (2a, 2b).

2. A washer nozzle according to claim 1, characterised in that the supply duct (1) has a substantially constant inner section, the transverse opening of the duct (1) being slightly smaller in front of the separation wall (6) than at the end of the latter.

3. A washer nozzle according to claim 1 or 2, characterised in that the outlet ducts (2a, 2b) have a substantially tapered section.

4. A washer nozzle according to one of claims 1 to 3, characterised in that the end part of the separation wall (6), opposite to the through holes (3a, 3b), is tapered.

5. A washer nozzle according to one of claims 1 to 4, characterised in that the wall (6) is located in only one part of the supply duct (1).

6. A washer nozzle according to claim 5, characterised in that the wall (6) is located throughout substantially one-eighth of the length of the supply duct (1).

7. A washer nozzle according to one of claims 1 to 6, characterised in that the diameter of the through holes (3a, 3b) is comprised between 1.5 and 2 mm and preferably equal to approximately 1.8 mm.

8. A washer nozzle according to one of claims 1 to 7, characterised in that it includes, inside the outlet ducts (2a, 2b), starting from their through hole (3a, 3b), a liquid-passing pipe (7a, 7b) having a substantially constant section and a diameter substantially inferior to that of the through holes (3a, 3b).

9. A washer nozzle according to claim 8, characterised in that the liquid-passing pipe (7a, 7b) comprises, at its end adjacent to the through hole (3a, 3b), a ball joint (8) making it possible to orient it.

10. A washer nozzle according to one of claims 1 to 9, characterised in that it further comprises means (9a, 9b) for fastening it to a part of the vehicle.

## Patentansprüche

1. Spritzdüse zur Verteilung einer Flüssigkeit, insbesondere zur Reinigung von Windschutzscheiben oder Scheinwerferkappen von Fahrzeugen, mit einem Zuführungskanal (1) und mindestens zwei Ausgangskanälen (2a, 2b), die jeweils über ein Verbindungsloch (3a, 3b) in den Zuführungskanal (1) münden, wobei mindestens einer der Ausgangskanäle (2a, 2b) in Bezug auf den Zuführungskanal (1) geneigt ist und der Zuführungskanal (1) sowie die Ausgangskanäle (2a, 2b) etwa geradlinig sind, dadurch gekennzeichnet, da 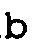 die Spritzdüse weiters eine Trennwand (6) umfa 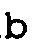 t, die zumindest in einem Teil des Zuführungskanals (1) angeordnet ist und an die Ausgangskanäle (2a, 2b) angrenzt, um den Zuführungskanal (1) in zwei Abteile (1a, 1b) zu unterteilen, in die jeweils das Verbindungsloch (3a, 3b) mündet, während die Wand (6) zur Aufgabe hat, die verstreute Verteilung der Flüssigkeit in den Ausgangskanälen (2a, 2b) zu verhindern.

2. Spritzdüse nach Anspruch 1, dadurch gekennzeichnet, da 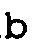 der Zuführungskanal (1) einen etwa konstanten Innenquerschnitt aufweist, wobei die Queröffnung des Kanals (1) entlang der Trennwand (6) etwas kleiner ist als an ihrem Ende.

3. Spritzdüse nach Anspruch 1 oder 2, dadurch gekennzeichnet, da 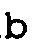 die Ausgangskanäle (2a, 2b) einen etwa kegelstumpfförmigen Querschnitt aufweisen.

4. Spritzdüse nach einem der Ansprüche 1 bis 3, dadurch gekennzeichnet, da 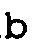 der extreme, den Verbindungslöchern (3a, 3b) gegenüberliegende Teil der Trennwand (6) verjüngt ist.

5. Spritzdüse nach einem der Ansprüche 1 bis 4, dadurch gekennzeichnet, da 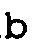 sich die Wand (6) nur in einem Teil des Zuführungskanals (1) befindet.

6. Spritzdüse nach Anspruch 5, dadurch gekennzeichnet, da 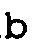 sich die Wand (6) etwa über ein Achtel der Länge des Zuführungskanals (1) erstreckt.

7. Spritzdüse nach einem der Ansprüche 1 bis 6, dadurch gekennzeichnet, da 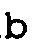 der Durchmesser der Verbindungslöcher (3a, 3b) zwischen 1,5 mm und 2 mm und vorzugsweise etwa 1,8 mm beträgt.

8. Spritzdüse nach einem der Ansprüche 1 bis 7, dadurch gekennzeichnet, da 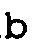 sie in den Ausgangskanälen (2a, 2b) ab ihrem Verbindungsloch (3a, 3b) ein Flüssigkeitsrohr (7a, 7b) mit einem etwa konstanten Querschnitt und einem etwas kleineren Durchmesser als derjenige der Verbindungslöcher (3a, 3b) aufweist.

9. Spritzdüse nach Anspruch 8, dadurch gekennzeichnet, da 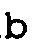 das Flüssigkeitsrohr (7a, 7b) an seinem an das Verbindungsloch (3a, 3b) angrenzenden Ende ein Gelenk (8) für seine Ausrichtung aufweist.

10. Spritzdüse nach einem der Ansprüche 1 bis 9, dadurch gekennzeichnet, da 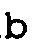 sie weiters Mittel (9a, 9b) zur Befestigung an einem Teil des Fahrzeugs umfabt.
